# EUROPÄISCHE PATENTSCHRIFT

(11) **EP 2 210 239 B1**
(45) Veröffentlichungstag und Bekanntmachung des Hinweises auf die Patenterteilung: **22.06.2011**
(21) Anmeldenummer: 08803962.3
(22) Anmeldetag: 10.09.2008
(51) Int. Cl.: G07C 5/00, B60R 25/00, G06Q 50/00

(54) **VERFAHREN ZUM ERFASSEN VON INFORMATIONEN**
METHOD FOR DETECTING INFORMATION
PROCÉDÉ POUR ENREGISTRER DES INFORMATIONS

(30) Priorität: 10.10.2007 DE 102007048610
(43) Veröffentlichungstag der Anmeldung: 28.07.2010
(73) Patentinhaber: Robert Bosch GmbH, 70442 Stuttgart (DE)
(72) Erfinder: GENSSLE, Andreas, 70771 Musberg (DE); KOLITSCH, Michael, 71287 Weissach (DE); PFISTER, Tobias, 70499 Stuttgart (DE)
(86) Internationale Anmeldenummer: PCT/EP2008/061995
(87) Internationale Veröffentlichungsnummer: WO 2009/049969

(56) Entgegenhaltungen:
- GB-A- 2 361 794
- US-A1- 2006 142 907
- US-A1- 2007 158 128
- US-A1- 2007 225 881

## Beschreibung

Die Erfindung betrifft ein Verfahren zum Erfassen von Informationen, ein Verfahren zur Zuordnung und Diagnose eines Betriebszustands, ein Steuergerät, ein Computerprogramm sowie ein Computerprogrammprodukt.

### Stand der Technik

Zum betriebsbegleitenden Erfassen von Informationen aus dem Fahrbetrieb sind verschiedene Verfahren bekannt.

Aus der Druckschrift JP 2005/337040 A ist eine Vorgehensweise bekannt, bei der mit Hilfe einer elektronischen Recheneinheit der Abgasmassenstrom und die effektive Öffnungsfläche eines Partikelfilters eines Motors berechnet wird. Durch statistische Auswertungsalgorithmen wird dabei die Änderung des Abgasgegendrucks berechnet und eine angemessene Zeit für die thermische Regeneration des Partikelfilters ermittelt.

In der Druckschrift KR 10 20050030316 A wird für ein Produktionsband der Serienfertigung eine elektronische Diagnoseeinheit vorgeschlagen, die es ermöglicht, die gefertigten Serienvarianten effizient zu überprüfen und einen Qualitätsprozess durch automatisierte Abläufe zu unterstützen. Dadurch ergeben sich Einsparungen bei der Band-Endkontrolle.

Ein Verfahren zum Sammeln und Managen von Fahrzeuginformationen aus dem Feld wird in der Druckschrift WO 2005/057519 beschrieben. Mit der hier vorgeschlagenen Methode werden Daten aus dem Fahrbetrieb gesammelt und einer statistischen Auswertung unterzogen. Auf Basis der analysierten Fahrzeuginformationen wird dann eine Fehleranalyse durchgeführt. Dabei kommt eine Verwaltungsbasisstation zur Übertragung und Verarbeitung der Daten zum Einsatz.

Eine mobile Fahrzeugfehlerdiagnoseeinrichtung, eine Fahrzeugdatenablage und ein Fahrzeugdiagnosesystem sind aus der Druckschrift JP 2003/114943 A bekannt. Hier erfolgt eine Bereitstellung eines Informationssammlungs- und Aufbereitungswerkzeugs für die exakte Fahrzeugdiagnose. In der Werkstatt können dann anhand der gesammelten Daten und durch Zugriff auf einen Datenspeicher Diagnose und Reparatur ausgeführt werden.

Die Druckschrift US 2004/0078135 A1 zeigt ein Fahrzeug-Kontrollsystem, bei dem innerhalb des Motorsteuergeräts im nicht-flüchtigen Speicher Informationen aus dem Fahrbetrieb aufgezeichnet werden. Diese betreffen die Häufigkeit der Fehlerdiagnose und die Betriebshäufigkeit der OBD bzw. On-Bord-Diagnose. Für OBD-Zwecke sind diese Informationen dann über ein Diagnose Scan Tool verfügbar und zugänglich.

Aus der Druckschrift GB 2414557 A ist ein Fahrzeug-Datenrecorder bekannt. Weiterhin ist hier die Nutzung eines zusätzlichen Moduls vorgesehen, das die im Fahrbetrieb über eine OBD-Schnittstelle bereitgestellten relevanten Fahrzeuginformationen aufzeichnet und diese mit einer speziellen Auswertesoftware so aufbereitet, dass z. B. nach einem Unfall das dem Unfall vorhergehende Fahrverhalten bekannt ist. Außerdem kann auf Wunsch des Fahrers eine Speicherung der Fahrzeuginformationen erfolgen.

Ein Verfahren zur Auswertung der Laufunruhe eines Verbrennungsmotors geht aus der Druckschrift DE 103 19 331 B3 hervor. Dabei wird ein Signal ausgewertet, das die Laufunruhe eines Verbrennungsmotors repräsentiert und einen bestimmten Kennfeldbereich des Verbrennungsmotors erfasst. Auf Grundlage eines Signals wird hierbei ein Zähler des Kennfeldbereichs heraufgesetzt.

Die US 2007/0225881 A zeigt ein System zum Überwachen und Aufzeichnen von KFZ-Daten.

### Offenbarung der Erfindung

Die Erfindung betrifft ein Verfahren zum Erfassen von Informationen aus dem Fahrbetrieb eines Fahrzeugs, das üblicherweise eine Brennkraftmaschine aufweist, gemäß den Gegenstand des Anspruchs 1.

Üblicherweise werden die ersten Informationen und somit entsprechende Werte für die ersten Informationen unmittelbar aus Rohdaten, die von Sensoren des Fahrzeugs bereitgestellt werden, abgeleitet und bereitgestellt. Somit werden über die ersten Informationen laufend erfassbare Betriebsparameter zu dem mindestens einen Betriebszustand ermittelt. Die zusätzlichen zweiten Informationen können eine erste Analyse und Auswertung der Rohdaten und somit auch der ersten Informationen umfassen. Demnach kann durch Erfassen der zweiten Informationen der mindestens eine Betriebszustand bereits während des Fahrbetriebs zusammenfassend beurteilt werden.

In einer Ausgestaltung des Verfahrens ist vorgesehen, dass als zweite Informationen statistische Kennwerte, die bspw. über eine Mittelwertbildung der Rohdaten und/oder der ersten Informationen gebildet werden, gespeichert werden. Somit ist eine statistische Merkmalsbildung und Auswertung von Fahrzustandsinformationen durch Bereitstellung der zweiten Informationen möglich. Aus diesen zweiten Informationen kann eine Wahrscheinlichkeit von bestimmten Fehlfunktionen als mögliche Betriebszustände des Fahrzeugs bzw. von fehlerhaften Komponenten des Fahrzeugs abgeleitet werden.

Demnach können mit dem Verfahren unter anderem Informationen zu einem als Fehler eingestuften Betriebszustand gespeichert werden. Allerdings können auch Informationen zu Betriebszuständen, die nicht als fehlerhaft eingestuft werden, gespeichert werden. Um hierzu nicht ständig Rohdaten zu einer Vielzahl von Betriebszuständen zu erfassen, können diese Rohdaten durch Bereitstellung zusammenfassender zweiter Informationen platzsparend gespeichert werden. So können bspw. aus einer Ansammlung mehrerer Rohdaten, die über einen längeren Zeitraum während des Fahrbetriebs gesammelt werden, Funktionen, beispielsweise Hilfsalgorithmen oder Kennwerte, gebildet und diese Funktionen bzw. Kennwerte als die zweiten Informationen gespeichert werden.

Außerdem ist es möglich, die Informationen unter Bereitstellung einer ausreichend genauen Auflösung zu skalieren. Hierdurch ist eine effiziente und Speicherplatz sparende Speicherung insbesondere der zweiten Informationen auf einem Speichermodul eines Steuergeräts des Fahrzeugs realisierbar. Zur Reduktion des anfallenden Datenumfangs können statt exakter Werte der Rohdaten tendenzielle Werte angegeben werden, so dass statt des exakten Werts, lediglich gespeichert wird, ob der Wert bspw. größer, kleiner oder gleich einem vorgegebenen Wert ist. Weiterhin kann die Auflösung auch von einer Fehlerhaftigkeit und/oder einer Art des Fehlers des mindestens einen Betriebszustands abhängen, so dass eine Umschaltung auf mindestens einen anderen Betriebszustand durchgeführt werden kann. Somit können zu gravierenden Fehlern die Daten unter einer höheren Auflösung und bei weniger relevanten Fehlern die Daten unter einer niedrigen Auflösung gespeichert werden. Weiterhin können die Daten zu den Informationen durch geeignete Skalierung zusammengefasst und gespeichert werden. Somit kann für eine Vielzahl von Rohdaten für bestimmte Betriebsparameter eine geeignete Skalierung bestimmt werden.

Zur Beurteilung einer Fehlerhaftigkeit bzw. eines Fehlers können geeignete Regeln aufgestellt werden, so dass eine Beurteilung der Fehlerhaftigkeit einer Komponente oder Fehler in einer speziellen Ausgestaltung der Erfindung durch statistisches Auswerten möglich ist. Insgesamt können innerhalb eines Speichers des Steuergeräts die Speicherwerte auf eine ausreichend genaue Auflösung in einem Informationsumfang skaliert werden.

In einer weiteren beispielhaften Ausgestaltung der Erfindung können die Informationen bspw. zu einem Betriebszustand einer Abgasanlage für eine Bennkraftmaschine des Fahrzeugs erfasst werden, wobei eine derartige Brennkraftmaschine in der Regel mit Benzin oder Diesel betrieben wird.

Die Erfindung betrifft zudem ein Verfahren zur Zuordnung und Diagnose mindestens eines Betriebszustands eines Fahrzeugs, bei dem Informationen berücksichtigt werden, die nach dem voranstehend beschriebenen Verfahren erfasst werden.

In weiterer Ausgestaltung des Verfahrens werden die Informationen an eine Einrichtung zur Durchführung der Diagnose übermittelt. Dieses Verfahren kann auch betriebsbegleitend und folglich während des Fahrbetriebs des Fahrzeugs durchgeführt werden. Die Informationen können bei einer bspw. betriebsbegleitend durchzuführenden Ferndiagnose an eine Datenbank der zentralen Einrichtung, bspw. einem Hersteller oder einem Originalgerätehersteller (Original Equipment Manufacturer, OEM) zur Bereitstellung einer zentralisierten Diagnose bzw. Ferndiagnose übermittelt werden. Hierzu können die dabei übermittelten Informationen auf einer Datenbank gespeichert und mit einer Recheneinrichtung verarbeitet werden. Eine derartige Fernübertragung kann üblicherweise dann erfolgen, wenn genügend Datensätze mit den Informationen vorliegen. Die Übermittlung bzw. Fernübertragung kann auch an eine Serviceeinrichtung bzw. Werkstatt erfolgen.

Erfindungsgemäß ist ein Steuergerät zum Erfassen von Informationen aus einem Fahrbetrieb eines Fahrzeugs vorgesehen, wobei dieses Steuergerät dazu ausgebildet ist, zu mindestens einem Betriebszustand des Fahrzeugs erste Informationen zu erfassen und zu diesem mindestens einen Betriebszustand über statistische Methoden zusätzliche zweite Informationen zu ermitteln und die ersten und zweiten Informationen zu diesem mindestens einen Betriebszustand zu speichern.

Dieses beschriebene Steuergerät ist dazu ausgebildet, die Schritte des voranstehend beschriebenen Verfahrens auszuführen. Das Steuergerät kann zur Speicherung der Informationen mindestens einen, bspw. als EEPROM, ausgebildeten Speicher aufweisen.

Die Erfindung betrifft weiterhin ein Computerprogramm mit Programmcodemitteln, um alle Schritte eines vorgestellten Verfahrens durchzuführen, wenn das Computerprogramm auf einem Computer oder einer entsprechenden Recheneinheit, insbesondere in dem beschriebenen Steuergerät, ausgeführt wird.

Ein außerdem erfindungsgemäß vorgesehenes Computerprogrammprodukt mit Programmcodemitteln, die auf einem computerlesbaren Datenträger gespeichert sind, ist zum Durchführen aller Schritte des voranstehend beschriebenen Verfahrens ausgebildet, wenn das Computerprogramm auf einem Computer oder einer entsprechenden Recheneinheit, insbesondere in dem vorgestellten Steuergerät, ausgeführt wird.

Durch dieses Computerprogramm kann das vorgestellte Steuergerät ergänzt werden.

Mit der vorliegenden Erfindung ist es bspw. auch möglich, eine eindeutige, betriebsbegleitende Zuordnung und Diagnose von Fehlersymptomen aus einer bspw. als Abgassystem ausgebildeten Vorrichtung des Fahrzeugs durchzuführen, wobei Rohdaten, die während des Betriebs des Fahrzeugs von mindestens einem Sensor bereitgestellt werden, in Abhängigkeit einer Fehlerhaftigkeit einer Betriebsbedingung zur Bereitstellung einer geeigneten Auflösung zumindest der zweiten Information skaliert abgespeichert werden, wobei bei einem Normalbetrieb die Auflösung unter einer groben Auflösung und bei einer durch Fehler charakterisierten Betriebssituation oder einem entsprechenden Betriebszustand eine Abspeicherung unter einer hohen Auflösung erfolgt.

Mit dem Verfahren können somit auch aussagekräftige Informationen zu Fehlern gewonnen werden. Dadurch kann eine eindeutige Zuordnung und Diagnose von Fehlersymptomen realisiert werden. Die statistische Merkmalsbildung kann unter Berücksichtigung von Regeln für eine Wahrscheinlichkeit, insbesondere eine Wahrscheinlichkeit von Fehlern, erstellt werden. Eine platzsparende Speicherung ist auch unabhängig davon möglich, ob der mindestens eine Betriebszustand fehlerhaft ist oder nicht. In einer weiteren Variante des Verfahrens werden nicht nur Fehler während der Fahrt gespeichert, sondern auch zur Bereitstellung der zweiten Informationen statistische Kennwerte mitgespeichert, die ebenfalls platzsparend gespeichert werden können. So ist es u. a. möglich, Informationen und somit Daten, die in der Regel 16 Bit umfassen, nunmehr derart zu skalieren, dass hierfür lediglich 4 Bit erforderlich sind. Somit kann eine größere Auflösung erzielt werden, wobei ein Mapping oder eine entsprechende Abbildung der Informationen konfigurierbar ist.

Mit dem Verfahren können daher u. a. eine statistische Merkmalsbildung und Auswertung von Fahrzustandsinformationen für eine Werkstattdiagnose durchgeführt werden.

Dabei wird weiterhin ein geeignetes Verfahren für die Gewinnung von aussagekräftigen Informationen für die sichere und eindeutige Diagnose und Zuordnung von Fehlersymptomen aus dem Fahrbetrieb, die für das Abgassystem erfasst werden, bereitgestellt.

Die hier in Ausgestaltung vorgeschlagene funktionale Ergänzung der Steuergerätesoftware erlaubt eine im Informationsumfang skalierbare und somit Speicherplatz und Prozessor-Ressourcen schonende Art, gezielt Informationen aus dem Fahrbetrieb zu gewinnen. Dieses Verfahren kann bspw. bei Brennkraftmaschinen mit einem Abgassystem bestehend aus Oxidationskatalysator, Dieselpartikelfilter und der zugehörigen Sensorik, die Temperatur-, Druck- bzw. Differenzdrucksensoren umfasst, genutzt werden. Andere Abgassystemkonfigurationen mit allgemeinen katalytischen Einrichtungen und/oder hydraulischen Ermittlung zur Einbringung zusätzlicher aktiver oder passiver Hilfsstoffe der Abgasnachbehandlung (AGNB) zur Minderung der emissionsrelevanten Abgasbestandteile sind ebenfalls durchführbar. Das angegebene Verfahren kann somit unabhängig von der benutzten Konfiguration eingesetzt werden.

Typischerweise können die gesammelten und statistisch ausgewerteten zweiten Informationen im Hinblick auf die aktive Werkstattdiagnose zur Ermittlung schadhafter Fahrzeugkomponenten genutzt werden. Anhand dieser ersten sowie zweiten Informationen ist es in Ausgestaltung möglich, die Ursache für ein Systemfehlverhalten im Abgasstrang zu detektieren und weitergehende Untersuchungen einzuleiten. Dies kann für den Schutz von Sensoren oder andere Komponenten des Einspritzsystems genutzt werden.

Die ersten sowie die im Rahmen des Verfahrens erzeugten zweiten Informationen können ebenso für die weitergehende Entwicklung der Fahrzeugbetriebsstrategie und der Abgasbetriebsstrategie verwendet werden.

Die Speicherung der während des Fahrzyklus gesammelten Roh-Daten, aus denen üblicherweise die ersten Informationen abgeleitet werden, und die generierten Merkmale zur Bereitstellung der zweiten Informationen im EEPROM Speicher und demnach in einem elektronisch löschbaren, programmierbaren Lesespeicher des Steuergeräts liefern bei einer weiteren Ausgestaltung der Erfindung eine Datenbasis zur Diagnose, z.B. für eine geführte Fehlersuche, in der Werkstatt.

Für die gespeicherten Informationen und somit Daten können u. a. Regeln festgelegt werden, mit denen die Wahrscheinlichkeit von bestimmten Fehlfunktionen bzw. fehlerhaften Komponenten abgeleitet werden kann. Dieses Verfahren ist typischerweise für ein System mit einem Partikelfilter geeignet und bietet dort aufgrund der erschwerten Diagnostizierbarkeit der Brennkraftmaschine mit einem Abgasnachbehandlungssystem mögliche Einsatzgebiete.

Die Speicherung der während des Fahrzyklus gesammelten Roh-Daten und generierten Merkmale, aus denen die zweiten Informationen abgeleitet werden können, im EEPROM Speicher liefern eine Datenbasis für die Weiterentwicklung von Steuergerätefunktionen oder Motorkomponenten. Die statisch ausgewerteten Felddaten bilden die Grundlage zur Entdeckung von Problemen und sog. Worst-Case-Fällen bzw. ungünstigsten Fällen.

Mit dem vorgestellten Verfahrens ist außerdem die platzsparende Speicherung der Werte im EEPROM des Steuergeräts möglich. Durch Skalierung der Speicherwerte auf eine ausreichend genaue Auflösungen können die benötigten Ressourcen innerhalb des Steuergeräts stark reduziert werden.

Das Verfahren kann in einer Ausführungsform im Rahmen einer Regenerationsstatistik zur Anwendung kommen. Dabei können Informationen zur Fehlerdiagnose in der Werkstatt geliefert werden, wobei eine Identifikation fehlerhafter Bauteile vorgenommen werden kann. Durch derartige fehlerhafte Bauteile können bspw. erhöhte Rußemissionen entstehen, so dass sich ein Dieselpartikelfilter (DPF) nicht mehr regenerieren kann. Außerdem können Informationen über ein Fahrverhalten erfasst werden. Somit kann eine Rechtfertigung von Endkundenbeanstandungen, z. B. bei Kraftstoffmehrverbrauch, erfolgen und eine Plausibilisierung von Fehlerbildern vorgenommen werden. Optional ist eine Speicherung statistischer Informationen als Feedback (Rückmeldung) für die Entwicklung möglich. Typischerweise wird eine Speicherung sinnvoller Informationen im EEPROM durchgeführt, was unter der Randbedingung, dass ein optimierter Ressourcenaufwand im Steuergerät realisiert ist, umgesetzt wird.

Im Rahmen der derartigen Regenerationsstatistik für den Dieselpartikelfilter ist es möglich, Informationen zur Fehlerdiagnose in der Werkstatt über einen sog. differentiellen Mobilitätsanalysator (differential mobility analyser, DMA), einem Messgerät zur Bestimmung der Mobilitätsverteilung gasgetragener Partikel und zudem indirekt der Größenverteilung dieser Partikel bereitzustellen.

Nachfolgend ist ein beispielhafter Überblick über beim Start der Regeneration der hier als Messwerte zu speichernden Informationen bzw. gespeicherten Werte gelistet.
- Auslösekriterium für die aktuelle Regeneration
- Rußmasse (Messung + Simulation) am Anfang der Regeneration
- km-Stand bei Start der Regeneration
- Simulierte Rußmasse am Anfang der Regeneration
- Gemessene Rußmasse am Anfang der Regeneration
- Mittlere Fahrzyklusdauer seit der letzten Regeneration (*)
- Mittlere Geschwindigkeit seit der letzten Regeneration (*)
- Normiertes Verhältnis dynamischer / gesamt Ruß oder Mittlere Beschleunigung seit letzter Regeneration (*)
- Zähler nicht ausreichende Rgn- oder Bel-phase (siehe unten)

Die am Ende der Regeneration als Messwerte zu speichernde Informationen bzw. gespeicherten Werte sind nachfolgend aufgeführt:
- Kriterium für Ende der Regeneration
- Maximale Temperatur vor DPF während der Regeneration (*)
- Maximale Temperatur vor OxiCat/Turb während der Regeneration (*)
- Regenerationsdauer (*)
- Simulierte Rußmasse am Ende der Regeneration
- Gemessene Rußmasse am Ende der Regeneration
- Mittlere Rußabbrandrate (*)
- Mittlerer Reglerausgang des inneren Temperaturreglers (*)
- Mittlerer Reglerausgang des äußeren Temperaturreglers (*)
- Mittlerer EngPOp/Geschw. während der Regeneration (*)

Für Messwerte, die mit (*) gekennzeichnet sind, ist typischerweise eine Berechnung erforderlich.

In weiterer Ausgestaltung können als Universalwerte ausgebildete Informationen, die insbesondere seit einem letzten Service gesammelt wurden, erfasst werden. Dabei kann zusätzlich zur Speicherung von n Einzelregenerationen ein allgemeiner Messwertesatz mit den verdächtigsten Werten und somit Informationen seit dem letzten Service gespeichert werden. Die hier wichtigsten EDC Größen für ein Einspritzsystem eines Dieselmotors sind z. B. die Maximaltemperatur des Oxidationskatalysators und Dieselpartikelfilters, eine maximale Abweichung zwischen Rußmengenmessung als erste Information und einer Rußmengensimulation als zweite Information am Start oder am Ende der Regeneration und/oder die Extremwerte der Regelabweichung. Wird hierbei n = 1 bedatet und somit gesetzt, wird nur dieser allgemeine Datensatz abgespeichert und somit auf einen Spar-Modus umgeschaltet.

Eine Koordination einer Speicherung sieht u. a. vor, dass eine Filterung der Regeneration bzw. Beladungsphase vorgenommen wird, wobei sehr kurze Beladungs- und Regenerationsphasen, z. B. bei abgebrochenen Regenerationen, üblicherweise nicht gespeichert werden. Eine mögliche Randbedingung der Filterung sieht vor, dass als eine Information immer ein Datenpaar aus Regenerations-Start und Ende gespeichert werden kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt eine erste schematische Darstellung zu einer ersten Ausführungsform des erfindungsgemäßen Verfahrens.
- Figur 2: zeigt eine zweite schematische Darstellung zu der ersten Ausführungsform des erfindungsgemäßen Verfahrens.
- Figur 3: zeigt eine dritte schematische Darstellung zu der ersten Ausführungsform des erfindungsgemäßen Verfahrens.
- Figur 4: zeigt eine vierte schematische Darstellung zu der ersten Ausführungsform des erfindungsgemäßen Verfahrens.
- Figur 5: zeigt in schematischer Darstellung eine Anordnung bei Durchführung einer zwei- ten Ausgestaltung des erfindungsgemäßen Verfahrens.

### Ausführungsformen der Erfindung

Die Erfindung ist anhand von Ausführungsbeispielen in den Figuren schematisch dargestellt und wird im folgenden unter Bezugnahme auf die Figuren ausführlich beschrieben.

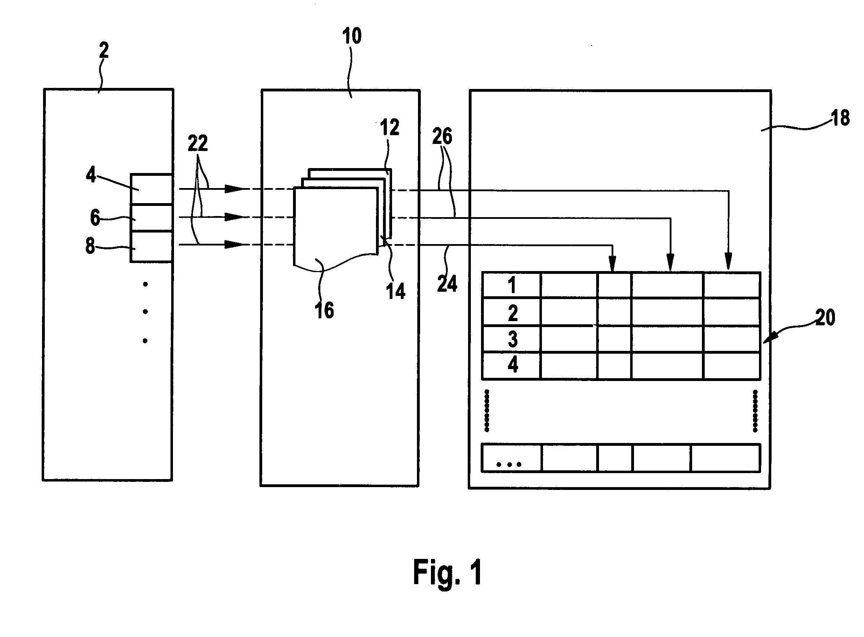

Die Figuren 1 bis 4 zeigen jeweils eine schematische Darstellung zu einer ersten Ausführungsform des erfindungsgemäßen Verfahrens, mit dem im vorliegenden Fall vorgesehen ist, eine Regenerationsstatistik für einen Dieselpartikelfilter (DPF) bereitzustellen. Dabei zeigt Figur 1 in schematischer Darstellung einen Funktionsblock 2 des Dieselpartikelfilters mit einer ersten Funktion 4, einer zweiten Funktion 6, und einer dritten Funktion 8. Außerdem können noch weitere Funktionen des Dieselpartikelfilters vorgesehen sein.

Außerdem zeigt Figur 1 eine Regenerationsstatistik 10 für eine neue Funktion, die eine erste Datei 12 für eine Skalierung, eine zweite Datei 14 für eine Koordination und eine dritte Datei 16 für Berechnungen aufweist.

In Figur 1 ist zudem ein hier als EEPROM ausgebildeter Speicher 18 dargestellt. Dieser Speicher 18 umfasst eine Tabelle mit einer Anzahl von n Zeilen, wobei von dieser Tabelle 20 lediglich die ersten vier Zeilen sowie die letzte, n-te Zeile dargestellt ist. Die n Einträge in der Tabelle 20 umfassen in der vorliegend beschriebenen Ausgestaltung jeweils zwei mal 32 Bit, wobei jeweils pro Beladung und Regenerationszyklus ein Eintrag in die Tabelle 20 eingetragen wird.

Bei Durchführung der Regenerationsstatistik werden von den drei genannten Funktionen 4, 6, 8 jeweils Rohdaten 22 mit einem Umfang von 16 Bit zu der Regenerationsstatistik 10 übermittelt. Aus diesen Rohdaten 22, die als erste Informationen vorgesehen sind, werden durch Vorsehen der Dateien 12, 14, 16 mittels der Regenerationsstatistik 10 modifizierte und somit zweite Informationen 24 bereitgestellt, wobei diese zweiten Informationen 24, die nachfolgend zu dem Speicher 18 übertragen werden und für die dritte Spalte der Tabelle 20 vorgesehen sind, einen Umfang von einem Bit aufweisen. Zweite Informationen 26, die für die vierte und fünfte Spalte der Tabelle 20 vorgesehen sind, umfassen jeweils einen Umfang von 3 Bit. Es ist vorgesehen, dass die beschriebenen zweiten Informationen 24, 26 aus den Rohdaten 22 unter Berücksichtigung der Dateien 12, 14, 16 mit statistischen Methoden berechnet und somit gebildet werden.

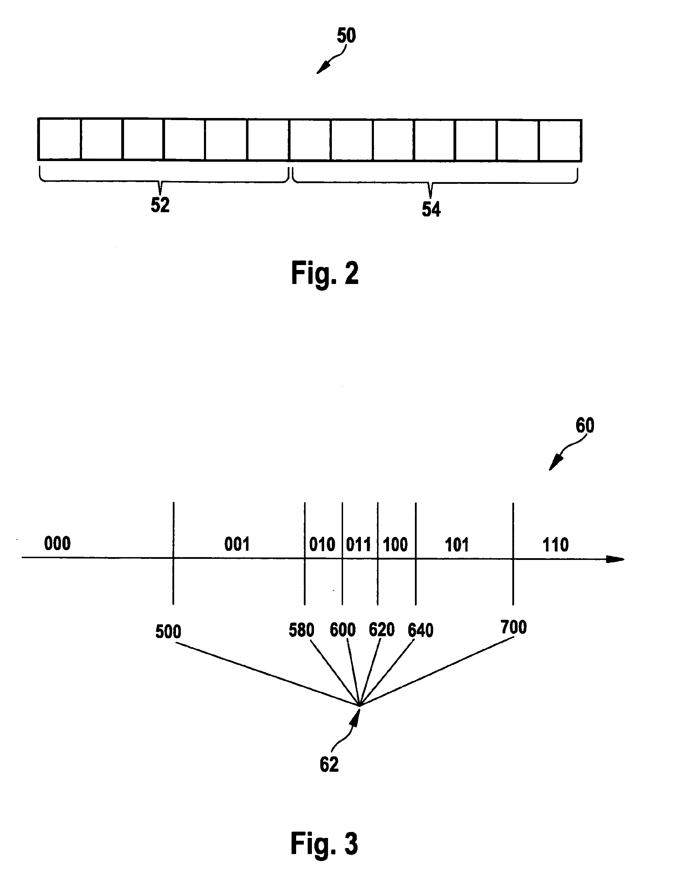

Anhand der schematischen Darstellung aus Figur 2 zu der vorliegenden ersten Ausführungsform des Verfahrens soll eine Aufteilung eines Eintrags pro Regenerationszyklus im Rahmen der Regenerationsstatistik für den Dieselpartikelfilter dargestellt werden. Dabei ist hier in schematischer Darstellung einen Speicherbereich 50, der im vorliegenden Fall sechs erste Speicherplätze 52 sowie sieben zweite Speicherplätze 54 umfasst, gezeigt. Dabei sind die ersten Speicherplätze 52 für Werte von Informationen am Ende einer Beladung des Dieselpartikelfilters und somit zu Beginn der Regeneration vorgesehen. Die zweiten Speicherplätze 54 sind für Werte am Ende der Regeneration vorgesehen.

Im Rahmen des Verfahrens ist im vorliegenden Fall zur Bereitstellung der Regenerationsstatistik für den Dieselpartikelfilter vorgesehen, für Werte des Speichers, die aus den Informationen bereitgestellt werden, eine anhand von Figur 3 vorgestellte nicht lineare Skalierung 60 vorzunehmen. Innerhalb dieser nicht linearen Skalierung 60 sind in einer oberen Zeile Werte für eine Bitcodierung, hier "000", "001", "010", "011", "100", "101" und "110" eingetragen. Unterhalb der nicht linearen Skalierung 60 sind in schematischer Weise Werte 62 dargestellt, zu denen im Beispiel einzelne Temperaturen von 500 bis 700 °C des Dieselpartikelfilters aufgetragen sind. Dabei zeigt die nicht lineare Skalierung 60 über eine Zuordnung jeweils einer Temperatur zu einer Bitcodierung, welche Auflösung für die Temperatur durch nicht lineare Skalierung 600 vorgenommen wird. Innerhalb dieser nicht linearen Skalierung 60 erfolgt eine Speicherung von Werten und somit Informationen über die Werte 62, z. B. über eine hier gezeigte Maximaltemperatur des Dieselpartikelfilters während einer Regeneration, wobei diese Temperatur hier auf 3 Bit skaliert ist. Für den Fall, dass während einer Phase der Regenerationsstatistik ein Fehler auftreten sollte, werden für die betroffenen Werte bitcodierte Ersatzwerte, z. B. "111" gespeichert.

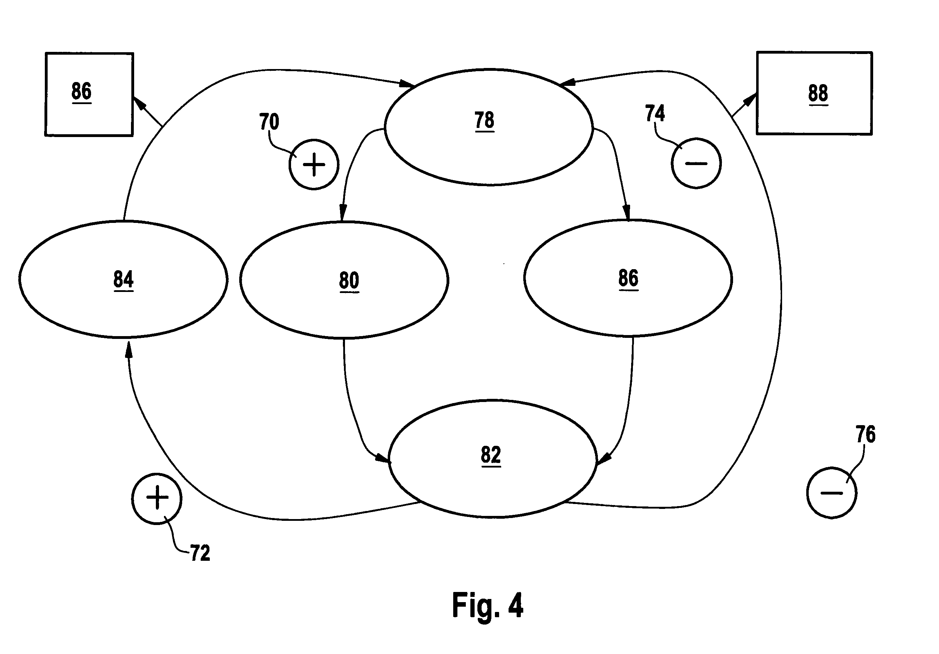

Figur 4 zeigt in schematischer Darstellung ein Ablaufschema zur Koordination der im Rahmen des Verfahrens bereitgestellten Regenerationsstatistik für den Dieselpartikelfilter. Durch dieses Ablaufschema wird verdeutlicht, wann die Informationen oder entsprechende Werte gespeichert werden. Hierbei sind in einem linken Abschnitt positive, zu bejahende Bedingungen 70, 72 mit eingetragenen Pluszeichen und rechts negative, zu verneinende Bedingungen 74, 76 mit Minuszeichen dargestellt.

Weiterhin ist in diesem Ablaufschema dargestellt, dass eine Beladungsphase 78 aktiv ist. Ausgehend hiervon ist die erste positive Bedingung 70 zu überprüfen, ob eine Regeneration gestartet wird und eine hinreichend hohe Rußbeladung vorliegt. Somit erfolgt eine Speicherung 80 von Start-Werten innerhalb der Regenerationsstatistik. Unter Berücksichtigung einer zweiten positiven Bedingung 72, wonach die Regeneration ausreichend fortgeschritten ist und weiterhin eine prozentuale Rußmassenabnahme in Bezug auf die Startmasse unter die Schwelle vorgegeben ist, erfolgt eine Speicherung 84, von End-Werten innerhalb der Regenerationsstatistik. Nachfolgend wird ein neuer Eintrag 86 durch Heraufsetzen eines Zählers n = n + 1 bereitgestellt. Innerhalb eines zweiten Zweigs des Ablaufschemas aus Figur 4 ist ausgehend davon, dass die Beladungsphase 78 aktiv ist, eine erste negative Bedingung 74 berücksichtigt, wonach eine Regeneration zu kurz ist, wodurch sich eine prozentuale Rußmassenzunahme über die gesetzte Schwelle ergibt. Nachfolgend erfolgt eine Speicherung 86 von Start-Werten innerhalb der Regenerationsstatistik, wobei der Zähler um 1 heraufgesetzt wird. Danach ist vorgesehen, dass die Regeneration 82 aktiv ist. Ausgehend hiervon wird die zweite negative Bedingung 76, wonach die Regenerationsphase zu kurz ist, berücksichtigt. Dies bedeutet in diesem Fall, dass eine prozentuale Rußmassenabnahme in Bezug auf die Startmasse unter die gesetzte Schwelle erfolgt. Dies bedeutet, dass der Eintrag 88 verworfen und n = n gesetzt wird.

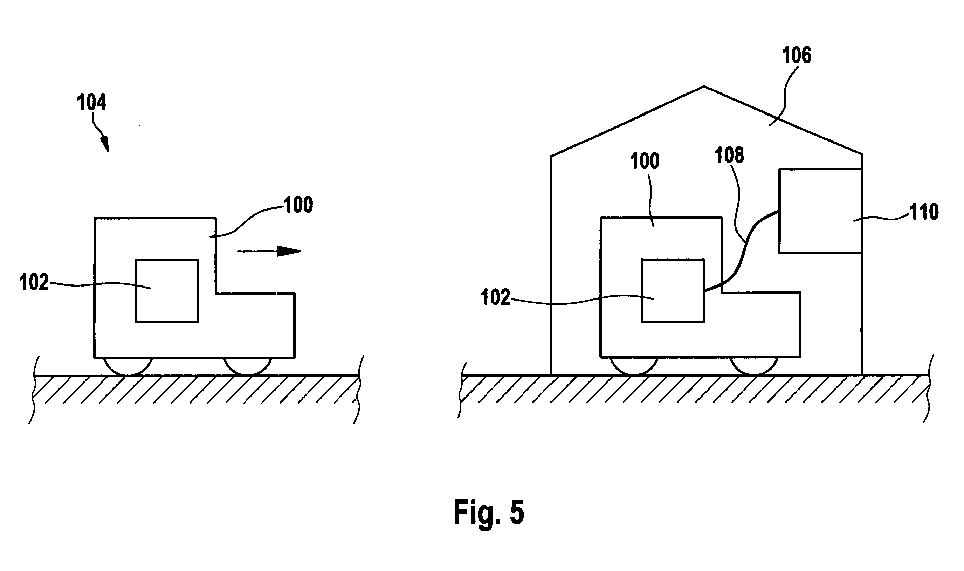

Figur 5 zeigt in schematischer Darstellung ein Fahrzeug 100, das eine Ausführungsform eines erfindungsgemäßen Steuergeräts 102 umfasst. Dabei ist das Fahrzeug 100 im linken Abschnitt von Figur 5 während eines Fahrbetriebs in einem ersten Betriebszustand 104 dargestellt. In einem rechten Abschnitt von Figur 5 befindet sich das Fahrzeug 100 in einer Werkstatt 106.

Das Steuergerät 102 ermöglicht eine weitere Ausführungsform des erfindungsgemäßen Verfahrens. Mit diesem Verfahren ist es möglich, Informationen aus dem Fahrbetrieb des Fahrzeugs 100 zu erfassen. Dabei werden in dem Betriebszustand 104 des Fahrzeugs 100 erste Informationen aus Rohdaten erfasst. Weiterhin werden zu diesem Betriebszustand über statistische Methoden zusätzliche zweite Informationen aus den Rohdaten ermittelt. Die ersten und zweiten Informationen zu dem Betriebszustand 104 werden sodann gespeichert. Wenn sich das Fahrzeug 100 in der Werkstatt 106 befindet, kann eine Zuordnung und Diagnose des Betriebszustands 104 des Fahrzeugs 100 erfolgen. Hierzu ist in der vorliegenden Ausführungsform vorgesehen, dass eine Verbindung 108 zwischen dem Steuergerät und einem Diagnosewerkzeug 110 bereitgestellt wird. Über die Verbindung 108 werden die erfassten ersten und zweiten Informationen des Betriebszustands 104 zu dem Diagnosewerkzeug 110 übertragen und zur Bereitstellung der Zuordnung und Diagnose des Betriebszustands 104 ausgewertet.

## Patentansprüche

1. Verfahren zum Erfassen von Informationen (24, 26) aus dem Fahrbetrieb eines Fahrzeugs (100), bei dem zu mindestens einem Betriebszustand (104) des Fahrzeugs erste Informationen erfasst und zu diesem mindestens einen Betriebszustand (104) über statistische Methoden zusätzliche zweite Informationen (24, 26) ermittelt werden, wobei die ersten und zweiten Informationen (24, 26) zu diesem mindestens einen Betriebszustand (104) gespeichert werden, wobei die Informationen (24, 26) unter Bereitstellung einer ausreichend genauen Auflösung skaliert werden, wobei bei einem Normalbetrieb eine Abspeicherung unter einer groben Auflösung und bei einem durch Fehler charakterisierten Betriebszustand (104) eine Abspeicherung unter einer hohen Auflösung erfolgt.

2. Verfahren nach Anspruch 1, bei dem eine Umschaltung auf mindestens einen anderen Betriebszustand (104) durchgeführt werden kann.

3. Verfahren nach Anspruch 1 oder 2, bei dem als zweite Informationen (24, 26) statistische Kennwerte gespeichert werden.

4. Verfahren nach einem der voranstehenden Ansprüche, bei dem Informationen zu einem als Fehler eingestuften Betriebszustand (104) gespeichert werden.

5. Verfahren nach einem der voranstehenden Ansprüche, bei dem die Informationen aus Rohdaten, die von mindestens einem Sensor (4, 6, 8) bereitgestellt werden, bereitgestellt werden.

6. Verfahren nach einem der voranstehenden Ansprüche, bei dem die Informationen (24, 26) zu einem Betriebszustand (104) einer Abgasanlage für eine Brennkraftmaschine, die mit Diesel oder Benzin betrieben wird, erfasst werden.

7. Verfahren zur Zuordnung und Diagnose mindestens eines Betriebszustands (104) eines Fahrzeugs (100), bei dem Informationen (24, 26), die durch ein Verfahren nach einem der voranstehenden Ansprüche erfasst werden, berücksichtigt werden.

8. Verfahren nach Anspruch 7, bei dem die Informationen (24, 26) an eine Einrichtung zur Durchführung der Diagnose übermittelt werden.

9. Steuergerät zum Erfassen von Informationen (24, 26) aus einem Fahrbetrieb eines Fahrzeugs (100), das dazu ausgebildet ist, zu mindestens einem Betriebszustand (104) des Fahrzeugs (100) erste Informationen zu erfassen und zu diesem mindestens einen Betriebszustand (104) über statistische Methoden zusätzliche zweite Informationen (24, 26) zu ermitteln und die ersten und zweiten Informationen (24. 26) zu diesem mindestens einen Betriebszustand (104) zu speichern und unter Bereitstellung einer ausreichend genauen Auflösung zu skalieren, wobei bei einem Normalbetrieb eine Abspeicherung unter einer groben Auflösung und bei einem durch Fehler charakterisierten Betriebszustand (104) eine Abspeicherung unter einer hohen Auflösung erfolgt

10. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinheit, insbesondere in einem Steuergerät (102) nach Anspruch 9, ausgeführt wird.

11. Computerprogrammprodukt mit Programmcodemitteln, die auf einem computerlesbaren Datenträger gespeichert sind, um alle Schritte eines Verfahrens nach einem der Ansprüche 1 bis 8 durchzuführen, wenn das Computerprogramm auf einem Computer oder einer entsprechenden Recheneinheit, insbesondere in einem Steuergerät nach Anspruch 9, ausgeführt wird.

## Claims

1. Method for detecting information (24, 26) from the driving operation of a vehicle (100), in which first information items relating to at least one operating state (104) of the vehicle are detected, and additional second information items (24, 26) relating to this at least one operating state (104) are determined by means of statistical methods, wherein the first and second information items (24, 26) relating to this at least one operating state (104) are stored, wherein the information items (24, 26) are scaled by making available a sufficiently precise resolution, wherein storage is carried out with coarse resolution in a normal operating mode, and storage is carried out with high resolution in an operating state (104) which is **characterized by** errors.

2. Method according to Claim 1, in which it is possible to switch over to at least one other operating state (104).

3. Method according to Claim 1 or 2, in which statistical characteristic values are stored as second information items (24, 26).

4. Method according to one of the preceding claims, in which information items relating to an operating state (104) which has been **characterized** as an error are stored.

5. Method according to one of the preceding claims, in which the information items are made available from raw data which are made available by at least one sensor (4, 6, 8).

6. Method according to one of the preceding claims, in which the information items (24, 26) are detected for an operating state (104) of an exhaust gas system for an internal combustion engine which is operated with diesel or petrol.

7. Method for assigning and diagnosing at least one operating state (104) of a vehicle (100), in which information items (24, 26) which are detected by means of a method according to one of the preceding claims are taken into account.

8. Method according to Claim 7, in which the information items (24, 26) are transmitted to a device for carrying out the diagnosis.

9. The control unit for detecting information items (24, 26) from a driving operation of a vehicle (100) which is designed to detect first information items relating to at least one operating state (104) of the vehicle (100) and to determine additional second information items (24, 26) relating to this at least one operating state (104) by means of statistical methods, and to store the first and second information items (24, 26) relating to this at least one operating state (104), and to scale said first and second information items (24, 26) by providing a sufficiently precise resolution, wherein storage takes place with coarse resolution in a normal operating mode and storage takes place with high resolution in an operating state (104) which is **characterized by** errors.

10. Computer program having program code means for carrying out all the steps of a method according to one of Claims 1 to 8 when the computer program is run on a computer or a corresponding computer unit, in particular in a control unit (102) according to Claim 9.

11. Computer program product having program code means which are stored on a computer-readable data carrier for carrying out all the steps of a method according to one of Claims 1 to 8 when the computer program is run on a computer or a corresponding computer unit, in particular in a control unit according to Claim 9.

## Revendications

1. Procédé de saisie d'informations (24, 26) concernant le fonctionnement d'un véhicule (100) en déplacement, dans lequel des premières informations concernant au moins un état de fonctionnement (104) du véhicule sont détectées et des deuxièmes informations supplémentaires (24, 26) concernant au moins un état de fonctionnement (104) sont déterminées par des méthodes statistiques, les premières et les deuxièmes informations (24, 26) concernant ce ou ces états de fonctionnement (104) étant conservées en mémoire, les informations (24, 26) étant mises à l'échelle de manière à obtenir une résolution suffisamment précise, et dans lequel la mise en mémoire s'effectue à une basse résolution en fonctionnement normal et à une haute résolution dans un état de fonctionnement (104) **caractérisé** comme défectueux.

2. Procédé selon la revendication 1, qui permet d'effectuer un basculement dans au moins un autre état de fonctionnement (104).

3. Procédé selon la revendication 1 ou 2, dans lequel des valeurs caractéristiques statistiques sont conservées en mémoire en tant que deuxièmes informations (24, 26).

4. Procédé selon l'une des revendications précédentes, dans lequel des informations concernant un état de fonctionnement (104) estimé comme défectueux sont conservées en mémoire.

5. Procédé selon l'une des revendications précédentes, dans lequel les informations sont préparées à partir de données brutes qui sont délivrées par au moins un détecteur (4, 6, 8).

6. Procédé selon l'une des revendications précédentes, dans lequel les informations (24, 26) concernant un état de fonctionnement (104) d'une installation de gaz d'échappement d'un moteur à combustion interne alimenté en diesel ou en essence sont détectées.

7. Procédé d'association et de diagnostic d'au moins un état de fonctionnement (104) d'un véhicule (100) dans lequel des informations (24, 26) saisies par un procédé selon l'une des revendications précédentes sont prises en compte.

8. Procédé selon la revendication 7, dans lequel les informations (24, 26) sont transmises à un dispositif qui exécute le diagnostic.

9. Appareil de commande destiné à saisir des informations (24, 26) concernant le fonctionnement d'un véhicule (100) en déplacement, et configuré pour saisir des premières informations concernant au moins un état de fonctionnement (104) du véhicule (100), pour déterminer par des méthodes statistiques des deuxièmes informations supplémentaires (24, 26) concernant ce ou ces états de fonctionnement (104), pour conserver en mémoire les premières et les deuxièmes informations (24, 26) concernant ce ou ces états de fonctionnement (104) et pour les mettre à l'échelle en formant une résolution suffisamment précise la mise en mémoire étant réalisée à une basse résolution en fonctionnement normal et à une haute résolution dans un état de fonctionnement (104) **caractérisé** comme défectueux.

10. Programme informatique doté de moyens de code de programme qui permettent d'exécuter toutes les étapes d'un procédé selon l'une des revendications 1 à 8 lorsque le programme informatique est exécuté sur un ordinateur ou une unité de calcul appropriée, en particulier dans un appareil de commande (102) selon la revendication 9.

11. Produit de programme informatique doté de moyens de code de programme qui sont conservés en mémoire sur un support de données lisible par ordinateur et qui permettent d'exécuter toutes les étapes d'un procédé selon l'une des revendications 1 à 8 lorsque le programme informatique est exécuté sur un ordinateur ou une unité de calcul appropriée, en particulier dans un appareil de commande (102) selon la revendication 9.
